## Europäisches Patentamt

## European Patent Office

## Office européen des brevets

(11) Veröffentlichungsnummer: **0 251 996**
**A1**

## (12) EUROPÄISCHE PATENTANMELDUNG

(21) Anmeldenummer: 87810299.5

(22) Anmeldetag: 13.05.87

(51) Int. Cl.⁴: **B 23 B 31/04**

(30) Priorität: 27.06.86 DE 3621534

(43) Veröffentlichungstag der Anmeldung:
07.01.88 Patentblatt 88/01

(84) Benannte Vertragsstaaten:
CH DE FR GB LI SE

(71) Anmelder: **HILTI Aktiengesellschaft**
**FL-9494 Schaan (LI)**

(72) Erfinder: **Rumpp, Gerhard**
**Schornstrasse 2**
**D-8084 Inning/Ammersee (DE)**

**Manschitz, Erwin**
**Holzbachstrasse 7**
**D-8034 Germering (DE)**

(74) Vertreter: **Wildi, Roland**
**Hilti Aktiengesellschaft Patentabteilung**
**FL-9494 Schaan (LI)**

(54) **Spannfutter für Werkzeuge.**

(57) Das Spannfutter verfügt über Spannbacken (11), die in Führungsnuten (9) in einer Spannhülse (8) verschiebbar gelagert sind. Die Führungsflächen (9a, 9b) der Führungsnuten (9) und/oder die korrespondierenden Führungsflächen (11a, 11b) der Spannbacken (11) sind durch in Längserstreckung der Führungsnuten (9) verlaufende Ausnehmungen (9c, 11c) unterbrochen, die mit einem nach aussen mündenden Raum (13) in Verbindung stehen. Von dem in das Spannfutter eindringenden Schmutz, wie beispielsweise Bohrklein, kann ein Teil zwischen die Führungsflächen (9a, 9b) der Führungsnuten (9) und die Führungsflächen (11a,11b) der Spannbacken (11) gelangen. Zufolge der hohen spezifischen Flächenpressung zwischen den Führungsflächen (9a, 9b; 11a, 11b) wird dieser Schmutz in die Ausnehmungen (9c, 11c) abgedrängt und gelangt von hier über den Raum (13) nach aussen. Das Spannfutter wird folgedessen durch Schmutz in seiner Funktionstüchtigkeit nicht beeinträchtigt.

Fig.1

## Beschreibung

### Spannfutter für Werkzeuge

Die Erfindung betrifft ein Spannfutter für Werkzeuge, mit einer Spannhülse und Spannbacken, wobei die Spannhülse an deren Innenfläche über den Umfang verteilt mehrere rückseitig in einen nach aussen offenen Raum mündende Führungsnuten mit Führungsflächen für korrespondierende Führungsflächen der Spannbacken aufweist.

Im Arbeitseinsatz sind Spannfutter, insbesondere beim Bohren in Mauerwerk, Beton und Gestein, einer grossen Verschmutzung durch Staub und Bohrklein ausgesetzt. Tritt Staub und Bohrklein in das Innere eines Spannfutters ein, so kann dies beispielsweise durch Verklemmen beweglicher Teile, wie der Spannbacken, die Funktionstüchtigkeit beeinträchtigen. Darüber hinaus hat starkes Verschmutzen einen schnelleren Verschleiss der beim Verstellen des Spannfutters bewegten Futterteile zur Folge.

Zur Minderung der Verschmutzung ist es bekannt (DE-GM 7 309 760), bei einem Spannfutter zum Abhalten von Bohrklein im Mündungsbereich der Aufnahmeöffnung für die Werkzeuge einen scheibenförmigen Dichtkörper aus elastischem Material und mit variabler Durchtrittsöffnung für den Schaft der Werkzeuge anzuordnen. Zufolge Ermüdungs- und Verschleisserscheinungen kann die Dichtwirkung des Dichtkörpers frühzeitig nachlassen, so dass wieder Störungen verursachendes Bohrklein in das Innere des Spannfutters eindringen kann. Zudem beeinträchtigt der Dichtkörper aufgrund von Sichtbehinderung die Handhabung des Spannfutters. Sind Werkzeuge zu spannen, die in bestimmter Drehstellung eingesetzt werden müssen, so lässt der Dichtkörper die hierfür massgebliche Lage der Spannbacken nicht erkennen.

Der Erfindung liegt die Aufgabe zugrunde, ein Spannfutter zu schaffen, dessen Funktionsfähigkeit und Lebenserwartung durch Verschmutzung nicht beeinträchtigt wird und in seiner Handhabung nicht durch Verschmutzung abhaltende Elemente behindert ist.

Erfindungsgemäss wird die Aufgabe dadurch gelöst, dass die Führungsflächen in deren quer zur Längserstreckung der Führungsnuten gemessenen Breite durch in Längserstreckung der Führungsnuten verlaufende Ausnehmungen unterbrochen sind.

Durch das Anordnen von Ausnehmungen werden die effektiv tragenden Bereiche der Führungsflächen im Vergleich zu den bekannten Spannfuttern kleiner, sodass eine erheblich höhere spezifische Flächenpressung zwischen den Führungsflächen von Spannhülse und Spannbacken auftritt. Diese höhere Flächenpressung unterbindet das Ansammeln von die Gleitfähigkeit beeinträchtigendem Staub und Bohrklein zwischen den Führungsflächen der Spannbacken und Spannhülse, indem allenfalls zwischen die Führungsflächen eindringender Staub oder eindringendes Bohrklein in die Ausnehmungen abgedrängt wird. Von hier entweicht der Staub oder das Bohrklein über den nach aussen offenen Raum. Die im Arbeitseinsatz auftretende Zentrifugalkraft unterstützt diesen Ableitvorgang. Aufgrund der dieserart kleinen Dimensionierung der Führungsflächen kann auf Flüssigschmierstoffe verzichtet werden.

Durch diese wirkungsvolle Ableitung des Bohrkleins erübrigen sich das Eindringen von Bohrklein in das Spannfutter hindernde Elemente, wie Dichtkörper.

Vorzugsweise sind Ausnehmungen im mittleren Bereich der quer zur radial verlaufenden Erstreckung gemessenen Breite der Führungsflächen angeordnet. Dadurch ist ein gleichmässig verteiltes Ableiten des Bohrkleins aus dem Bereich der Führungsflächen gewährleistet. Diese Anordnung ist insbesondere von Vorteil, wenn pro Führungsfläche nur eine Ausnehmung vorgesehen ist. Beim Anordnen mehrerer Ausnehmungen pro Führungsfläche ist eine gleichmässige Verteilung der Ausnehmungen über die Breite der Führungsflächen zweckmässig.

In Weiterbildung der Erfindung weisen die Ausnehmungen eine quer zur Längserstreckung der Führungsnuten gemessene lichte Weite von einem Viertel bis einem Drittel der Breite der Führungsnuten auf. Diese Dimensionierung gewährleistet einen für wirkungsvolles Ableiten des Bohrkleins geeignet grossen Querschnitt der Ausnehmungen und definiert beidseits der Ausnehmung gelegene Bereiche der Führungsflächen, die ein verschleisstechnisch ausreichend grosses Auflager bilden und gleichzeitig hohe spezifische Flächenpressung zwischen den korrespondierenden Führungsflächen von Spannhülse und Spannbacken sicherstellen. Im Querschnitt können die Ausnehmungen beispielsweise rechteckig, dreieckig oder in Form eines Kreisabschnittes gestaltet sein. In Längserstreckung enden die Ausnehmungen zweckmässig vor der arbeitsseitigen Stirnfläche der Spannhülse beziehungsweise der Spannbacken. Dadurch lässt sich ein Eindringen von Bohrklein über die Ausnehmungen in das Spannfutter verhindern.

Nach einer bevorzugten Ausführungsform sind die Führungsflächen der Spannbacken durch Ausnehmungen unterbrochen. Diese Ausführungsform zeichnet sich insbesondere durch einfache Herstellbarkeit aus.

Mit Vorteil können die Führungsflächen der Spannhülse durch Ausnehmungen unterbrochen sein. Dies bietet insoweit wirtschaftliche Vorteile, als sich das Anordnen von Ausnehmungen an den entsprechenden Führungsflächen der Spannbacken erübrigt. Es lassen sich also einfache und deshalb kostengünstig herstellbare Spannbacken verwenden, sodass deren verschleissbedingt allenfalls erforderlicher Austausch nur geringe Kosten verursacht.

Eine Kombination all dieser Vorteile kann erreicht werden, wenn die Ausnehmungen zum Teil an den Spannbacken und zum Teil an der Spannhülse angeordnet sind. Besonders zweckmässig ist es dabei, die Ausnehmung an der Spannhülse im Bereich der den Grund der Führungsnuten bildenden Führungsfläche vorzusehen. Die Ausnehmungen an den Spannbacken sind diesfalls an den die Seitenwandungen der Spannbacken bildenden Führungsflächen vorgesehen. Es lassen sich hier auch mehrere parallel zueinander verlaufende Ausnehmungen an jeder dieser Führungsflächen anordnen.

Die Erfindung wird nachstehend anhand einer Zeichnung, die ein Ausführungsbeispiel wiedergibt, näher erläutert. Es zeigen:

Fig. 1 ein Spannfutter im Längsschnitt;

Fig. 2 einen Schnitt durch das Spannfutter nach Fig. 1, gemäss Schnittverlauf II-II, in vergrösserter Darstellung.

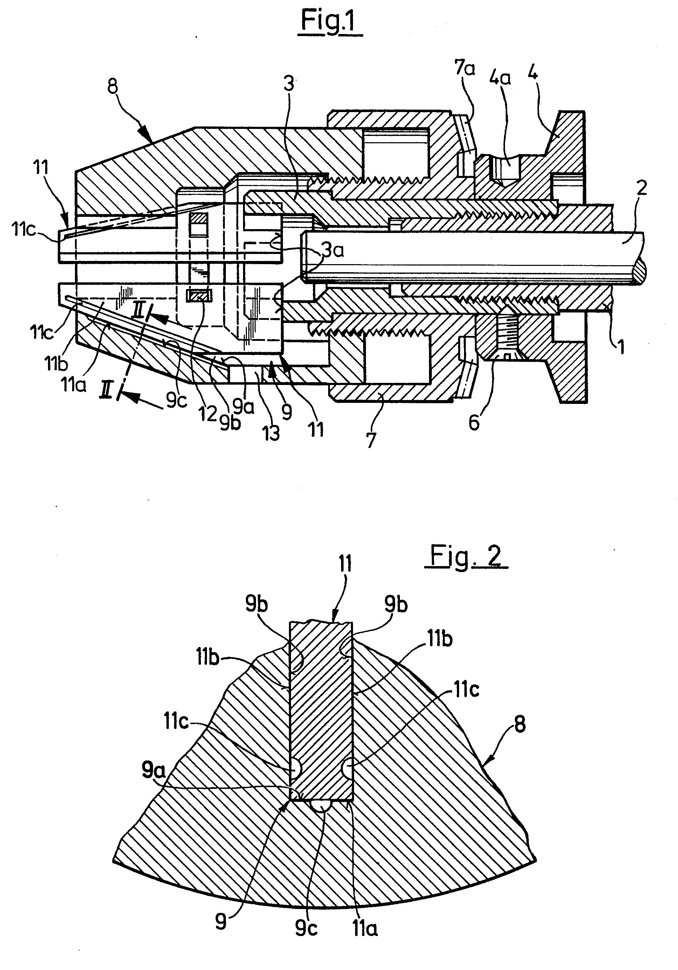

Das in Fig. 1 dargestellte Spannfutter ist zum Einsatz in Hammerbohrmaschinen vorgesehen. Es ist zu diesem Zwecke auf ein aus der Hammerbohrmaschine ragendes Führungsrohr 1 aufgeschraubt. Durch die Zentralbohrung des Führungsrohres 1 ragt ein verschiebbarer Döpper 2 in das Spannfutter ein und vermittelt einem hier nicht gezeigten, in das Spannfutter eingesetzten Werkzeug Schläge.

Das Spannfutter verfügt über eine mit dem Führungsrohr 1 verschraubte Futterhülse 3. Ein Stützflansch 4 sitzt hinterseitig auf der Futterhülse 3 und ist mit dieser über eine Schraube 6 fest verbunden. Auf der Futterhülse 3 ist eine Stellhülse 7 drehbar und axial unverschieblich verlagert. Im Gewindeeingriff mit der Stellhülse 7 steht eine insgesamt mit 8 bezeichnete Spannhülse. Diese verfügt über zu deren Zentrum hin offene, in Umfangsrichtung zueinander in gleichmässigem Winkelabstand angeordnete drei Führungsnuten 9. In den Führungsnuten 9 sind, axial und radial verschiebbar, insgesamt mit 11 bezeichnete Spannbacken gelagert. Letztere werden von einer Ringfeder 12 radial gegen den als Führungsfläche 9a dienenden Grund der Führungsnuten 9 gedrückt. Aufgrund der Neigung der Führungsflächen 9a zur Achse des Spannfutters bewirkt ein Teil der Federkraft ein stetes axiales Abstützen der Spannbacken 11 an der Futterhülse 3. Die Spannbacken 11 ragen hierzu in stirnseitige Schlitze 3a der Futterhülse 3. Auf diese Weise sind über die Spannbacken 11 die Futterhülse 3 und die Spannhülse 8 miteinander drehschlüssig verbunden.

Die Führungsnuten 9 verfügen ferner über seitliche Führungsflächen 9b. Mit der Führungsfläche 9a der Führungsnuten 9 korrespondiert eine durch den Rücken der Spannbacken 11 gebildete Führungsfläche 11a derselben. Mit den Führungsflächen 9b der Führungsnuten 9 korrespondieren seitliche Führungsflächen 11b der Spannbacken 11. Die Führungsfläche 9a der Führungsnuten 9 ist durch eine in Längserstreckung der Führungsnuten verlaufende Ausnehmung 9c unterbrochen. Wie die Fig. 2 verdeutlicht, ist die Ausnehmung 9c im Querschnitt als Kreisabschnitt ausgebildet und liegt mittig zur Breite der Führungsfläche 9a. Die lichte Weite der Ausnehmung 9c erstreckt sich über ein Drittel der Breite der Führungsnut 9. Die Spannbacken 11 sind an ihren seitlichen Führungsflächen 11b mit dem wesentlichen in Längserstreckung der Führungsnuten 9 verlaufenden Ausnehmungen 11c versehen. In Richtung zur Hammerbohrmaschine hin münden die Ausnehmungen 9c und 11c wie auch die Führungsnuten 9 in einen nach aussen offenen Raum 13.

Zum Oeffnen oder Schliessen des Spannfutters wird die Stellhülse 7 gegenüber der Futterhülse 3 verdreht. Dies kann händisch erfolgen, wobei die eigentliche Spannkraft letztlich mit Hilfe eines herkömmlichen Spannschlüssels aufgebracht wird. Der Spannschlüssel wird hierzu in eine Aufnahemöffnung 4a des Stützflansches 4 eingesteckt und greift mit einer Verzahnung in eine Kegelverzahnung 7a der Stellhülse ein. Durch Drehen der Stellhülse 7 wird die Spannhülse 8 axial verschoben, was eine radiale Lageverstellung der Spannbacken 11 zur Folge hat.

Im Arbeitseinsatz des Spannfutters dringt vom Werkzeug abgetragenes Bearbeitungsgut, beispielsweise in Form von Bohr klein, über zwischen den Spannbacken 11 vorhandene Oeffnungen, von vorne in das Spannfutter ein. Das Bohrklein wird bei Drehung des Spannfutters durch die Zentrifugalkraft im Inneren des Spannfutters radial gegen die Führungsnuten 9 gedrängt. Zwischen die Führungsflächen 9a, 9b der Führungsnuten 9 und die Führungsflächen 11a, 11b der Spannbacken 11 gelangendes Bohrklein wird aufgrund der hier vorhandenen hohen spezifischen Flächenpressung in die Ausnehmungen 9c und 11c abgedrängt und gelangt über diese in den Raum 13, um alsdann nach aussen zu entweichen. Die Funktion des Spannfutters wird dank dieser wirkungsvollen Bohrklein-Abfuhr nicht beeinträchtigt.

**Patentansprüche**

1. Spannfutter für Werkzeuge, mit einer Spannhülse (8) und Spannbacken (11), wobei die Spannhülse (8) an deren Innenfläche über den Umfang verteilt mehrere rückseitig in einen nach aussen offenen Raum (13) mündende Führungsnuten (9) mit Führungsflächen (9a, 9b) für korrespondierende Führungsflächen (11a, 11b) der Spannbacken (11) aufweist, **dadurch gekennzeichnet**, dass die Führungsflächen (9a, 9b; 11a, 11b) in deren quer zur Längserstreckung der Führungsnuten (9) gemessenen Breite durch in Längserstreckung der Führungsnuten (9) verlaufende Ausnehmungen (9c, 11c) unterbrochen sind.

2. Spannfutter nach Anspruch 1, **dadurch gekennzeichnet**, dass die Ausnehmungen (9c) im mittleren Bereich der quer zur radial verlaufenden Erstreckung gemessenen Breite der Führungsflächen (9a) angeordnet sind.

3. Spannfutter nach Anspruch 1 oder 2, **dadurch gekennzeichnet**, dass die Ausnehmungen (9c, 11c) eine quer zur Längserstreckung der Führungsnuten (9) gemessene lichte Weite von einem Viertel bis einem Drittel der Breite der Führungsnuten (9) aufweisen.

4. Spannfutter nach einem der Ansprüche 1 bis 3, **dadurch gekennzeichnet**, dass die Führungsflächen (11b) der Spannbacken (11) durch Ausnehmungen (11c) unterbrochen sind.

5. Spannfutter nach einem der Ansprüche 1 bis 4,

**dadurch gekennzeichnet**, dass die Führungsflächen (9a) der Spannhülse (8) durch Ausnehmungen (9c) unterbrochen sind.

0251996

## Fig.1

## Fig. 2

## EINSCHLÄGIGE DOKUMENTE

EP 87810299.5

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US - A - 879 741 (COIT) <br> * Fig. 2,6 * | 1,3,4 | B 23 B 31/04 |
| A | US - A - 876 244 (SHIGON) <br> * Fig. 1,3 * | 1,3,4 | |
| A | DE - B - 1 103 722 (CHRISTEN) <br> * Gesamt * | 1 | |
| A | DE - C - 823 561 (WOLLENHAUPT) <br> * Fig. 1,3,4 * | | |

---- 

**RECHERCHIERTE SACHGEBIETE (Int. Cl.4)**

B 23 B 31/00

Der vorliegende Recherchenbericht wurde für alle Patentansprüche erstellt.

| Recherchenort | Abschlußdatum der Recherche | Prüfer |
|---|---|---|
| WIEN | 17-08-1987 | FUCHS |